# EUROPÄISCHE PATENTSCHRIFT

(11) **EP 0 472 079 B1**
(45) Veröffentlichungstag und Bekanntmachung des Hinweises auf die Patenterteilung: **02.11.1995**
(21) Anmeldenummer: 91113486.4
(22) Anmeldetag: 12.08.1991
(51) Int. Cl.: C08G 64/18

(54) **Blockcopolymere aus Acrylaten oder Methacrylaten und cyclischen, aliphatischen Carbonaten**
Block copolymers of acrylates and methacrylates and cyclic, aliphatic carbonates
Copolymères séquencées à partir d'acrylates ou de méthacrylates et de carbonates cycliques et aliphatiques

(30) Priorität: 24.08.1990 DE 4026700
(43) Veröffentlichungstag der Anmeldung: 26.02.1992
(73) Patentinhaber: BAYER AG, 51368 Leverkusen (DE)
(72) Erfinder: Höcker, Hartwig, Prof. Dr., W-5100 Aachen (DE); Keul, Helmut, Dr., W-5100 Aachen (DE); Hovestadt, Wieland, Dipl.-Chem., W-5042 Erftstadt (DE); Leitz, Edgar, Dr., W-4047 Dormagen (DE)

(56) Entgegenhaltungen:
- EP-A- 0 235 741
- EP-A- 0 400 273
- US-A- 4 319 003
- CHEMICAL ABSTRACTS Band 98, Nr. 26, 27. Juni
- 1983, Zusammenfassung Nr. 216135u, Columbus, Ohio, US; Z.G. GARDLUND et al.: "Polycarbonate-poly(methyl methacrylate) block copolymers: synthesis and characterization" & J. Polym. Sci., Polym. chem. Ed., 1983, Band 21, Nr. 5, Seiten 1251-1261
- DIE MAKROMOLEKULARE CHEMIE Band 187, Nr. 12, Dezember 1986, Seiten 2833-2839, Basel, CH; H. KEUL et al.: "Block polymers obtained by means of anionic polymerization. Polystyrene-block-poly(epsilon-caprolactone) and polystyrene-block-poly(2,3-dimethyltrimethylene carbonate)"

## Beschreibung

Blockcopolymere aus Polymerisaten, aliphatischen Carbonaten und Polymerisaten von Styrol, Isopren oder Butadien sowie ein Verfahren zu ihrer Herstellung sind bekannt (vgl. DE-OS 3 607 727 und Makromol. Chem. 187, 2833 (1986). Blockcopolymere aus aliphatischen Carbonaten und Methacrylaten sind jedoch nach diesem Verfahren nicht zugänglich.

Gegenstand dieser Erfindung sind Blockcopolymere aus Blöcken von polymerisierten Acrylaten oder Methacrylaten und Blöcken von polymerisierten cyclischen aliphatischen Carbonaten. Die Blockcopolymeren entsprechen den Formeln (I) und (II)

A ― B (I)

B - A - B (II)

worin
- A: ein Polymerisat von Acrylaten oder Methacrylaten und
- B: ein Polymerisat von aliphatischen Carbonaten darstellt.

### Aufbau des Blockes A:

Der Block A ist ein Polymerisat von Verbindungen der Formel (III) 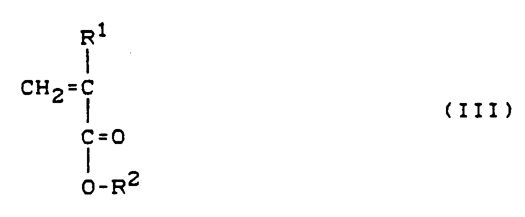
worin
- R¹: Wasserstoff, Methyl,
- R²: C₁-C₁₈-Alkyl, C₅-C₆-Cycloalkyl, C₇-C₁₂-Aralkyl, C₁-C₆-Alkylenoxy-C₁-C₆-alkyl.

Beispiele für Verbindungen der Formel (III) sind: Methylacrylat, Ethylacrylat, 2-Ethoxy-ethylacrylat, t-Butylacrylat, Methylmethacrylat, t-Butylmethacrylat, iso-Butylmethacrylat, n-Butylmethacrylat, Ethylmethacrylat, Dodecylmethacrylat, Octadecylmethacrylat, (2,3-Epoxypropyl)methacrylat, Methoxy-propylmethacrylat, Ethoxy-isobutylmethacrylat, Cyclohexylmethacrylat, Phenyl-ethylmethacrylat, Phenyl-propylmethacrylat.

Der Block A ist vorzugsweise ein Polymerisat von Methylmethacrylat oder vom t-Butylmethacrylat.

### Aufbau des Blockes B:

Der Block B ist ein Polymer von cyclischen aliphatischen Carbonaten der Formel (IV) 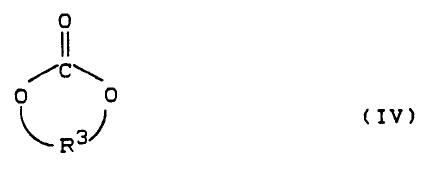
und/oder der Formel (V) 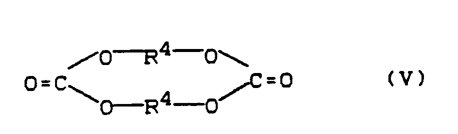
In diesen Formeln haben die allgemeinen Bezeichnungen folgende Bedeutungen:
- R³: in Formel (IV)

a) -CH₂CH₂CH(CH₃)-,

b) -CH₂CH₂OCH₂CH₂OCH₂CH₂-,

c) -CH₂CH(CH₃)CH₂CH₂C(CH₃)₂CH₂-,

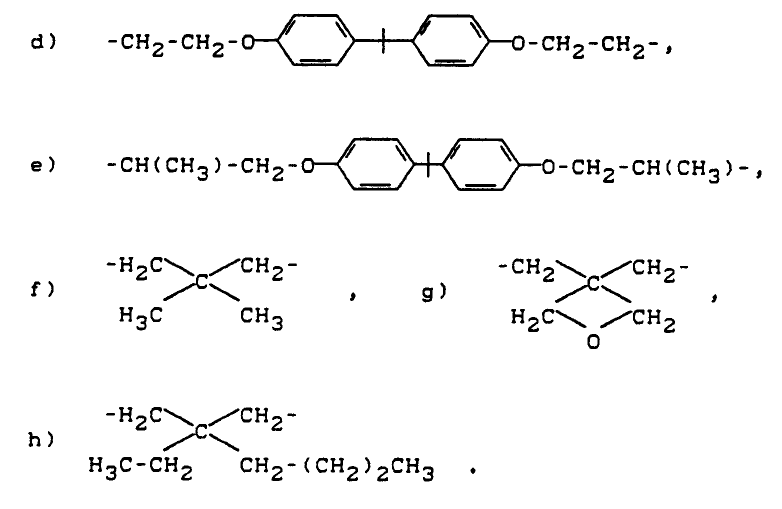

R⁴ Formel (V) ein linearer C₄-C₁₂-Alkylen-Rest, ein Rest der Formel b) oder der Formel i)

i) -CH₂-CH₂-O-CH₂-CH₂-

Der Block B ist vorzugsweise ein Polymer von Neopentylglykolcarbonat.

Die mittleren Molekulargewichte (M_{w}) für dem Block A sind 500 bis 100 000 g/Mol, vorzugsweise 500 bis 50 000 g/Mol; für den Block B 2000 bis 200 00 g/Mol, vorzugsweise 3000 bis 100 000 g/Mol.

Die Blockcopolymeren enthalten die Blöcke A und B jeweils in Mengen von 2 bis 98 Gew.-% (bezogen auf Gesamtmenge A + B), vorzugsweise in Mengen von 5 bis 95 Gew.-% (bezogen auf Gesamtmenge A + B).

Weiterer Gegenstand der Erfindung ist ein Verfahren zur Herstellung von Blockcopolymerenm der Formeln (I) und (II)

A ― B (I)

B - A - B (II

)

in dem man in einer ersten Stufe ein Acrylat oder Methacrylat in einem aprotischen organischen Lösungsmittel unter Luft- und Feuchtigkeitsausschluß mit Hilfe eines Gruppentransfer-Katalysators bei Temperaturen von -20°C bis +50°C, vorzugsweise 0°C bis +30°C, und einem Monomer/Lösungsmittel-Gewichtsverhältnis von 2:100 bis 30:100, vorzugsweise 5 bis 20:100 unter Bildung des A-Blocks polymerisiert, in einer zweiten Stufe ein cyclisches aliphatisches Carbonat, gegebenenfalls gelöst in einem aprotischen organischen Lösungsmittel, sowie eine nucleophile Fluorid-Verbindung zusetzt und bei Temperaturen von -50°C bis +50°C, vorzugsweise -30°C bis +20°C unter Bildung der B-Blöcke weiter polymerisiert und anschließend die polymerisationsaktiven Zentren desaktiviert.

Die Gruppentransfer-Katalysatoren zur Herstellung der Blockcopolymeren der Formel (I) bestehen aus Silylverbindungen der Formel (VI) (Initiator) 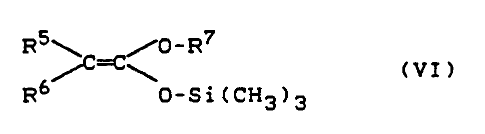
worin
- R⁵: C₁-C₄-Alkyl, C₂-C₈-Alkylen, bevorzugt Methyl,
- R⁶: C₁-C₄-Alkyl, C₂-C₈-Alkylen, bevorzugt Methyl,
- R⁷: C₁-C₄-Alkyl, bevorzugt Methyl
bedeutet und einer nucleophilen Verbindung (Desilylierungsmittel).

Die Gruppentransfer-Katalysatoren zur Herstellung der Blockcopolymeren der Formel (II) bestehen aus Silylverbindungen der Formel (VI) (Initiator)
worin R⁵, R⁷ die dort genannte Bedeutung haben und R⁶ ein Rest der Formel (VII) 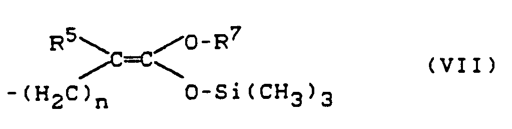
mit n = 1 bis 8,
ist und einer nucleophilen Verbindung (Desilylierungsmittel).

Nucleophile Verbindungen sind z.B. Fluoride, Bifluoride, Azide, Benzoate und bevorzugt Cyanide. Beispiele dafür sind:
Tris(dimethylamino)schwefel(trimethylsilyl)difluorid (TASSiMe₃F₂), Tetrabutylammoniumfluorid (TBAF), Tris(dimethylamino)sulfoniumbifluorid (TASF₂), Tetrabutylammoniumbifluorid, Kaliumbifluorid, Benzyltrimethylammoniumfluorid und -bifluorid sowie Tetrabutylammoniumcyanid.

Besonders bevorzugte nucleophile Verbindung zum Aufbau des Blockes A ist Tetrabutylammoniumcyanid.

Das Molverhältnis von Initiator zu nucleophiler Verbindung ist 100:1 bis 2000:1, vorzugsweise 300:1 bis 1200:1.

Zum Aufbau der Blöcke B werden als nucleophile Fluorid-Verbindungen (Desilylierungsmittel) beispielsweise Tris(dimethylamino)schwefel(trimethylsilyl)difluorid (TASSiMe₃F₂), Tetrabutylammoniumfluorid (TBAF) und Benzyltrimethylammoniumfluorid eingesetzt.

Besonders bevorzugte nucleophile Fluorid-Verbindung zum Aufbau der Blöcke B ist Tris(dimethylamino)schwefel(trimethylsilyl)difluorid (TASSiMe₃F₂).

Das Molverhältnis von nucleophiler Fluorid-Verbindung zu Initiator (aus der ersten Polymerisationsstufe) beträgt 1:1 bis 1,3:1, vorzugsweise 1:1.

Die bei der Polymerisation eingesetzte Menge an Initiator (Silylverbindung der Formel (VI)) ist im allgemeinen 3 x 10⁻⁴ bis 2 x 10⁻¹ Mol-%, vorzugsweise 6,5 x 10⁻⁴ bis 2,5 x 10⁻¹ Mol-%, bezogen auf das Gewicht der Monomeren.

Geeignete Lösungsmittel für die Polymerisation sind aprotische, polare Kohlenwasserstoffe wie Tetrahydrofuran, Tetrahydropyran, Dioxan oder 1,2-Dimethoxyethan; bevorzugt ist Tetrahydrofuran. In der zweiten Stufe der Polymerisation kann auch ein unpolarer, aromatischer Kohlenwasserstoff z.B. Toluol zugegeben werden.

Nach der Polymerisation werden die polymerisationsaktiven Zentren desaktiviert. Als Desaktivatoren werden protische Verbindungen, z.B Wasser, Alkohole, Säuren oder Mischungen daraus eingesetzt. Bevorzugte Desaktivatoren sind Mischungen aus Methanol/Salzsäure und Methanol/Phosphorsäure.

Die erfindungsgemäßen Blockcopolymeren können in an sich bekannter Weise abgetrennt werden, z.B. durch Ausfällen mit Alkoholen, Filtrieren und anschließende Trocknung oder durch Eindampfen der Polymerlösung in Ausdampfaggregaten, wie Schneckenextrudern oder Dünnmschichtverdampfern.

Die Anwendung der Blockcopolymeren ist abhängig von deren chemischen und molekularen Aufbau. Beispielsweise eignen sich solche mit einem kristallinen Block für Formkörper für den Automobilaußenbereich, da sie gute Beständigkeit gegenüber organischen Lösungsmitteln aufweisen. Copolymere mit einem Block mit Kautschukeigenschaften werden vorwiegend zur Herstellung von flexiblen Folien, Dichtungen etc. verwendet. Weiterhin eignen sich die Blockcopolymeren als Verträglichkeitsvermittler für entsprechende Homopolymer-Mischungen.

### Beispiele

Blockcopolymer: A - B
Block A = Polymethacrylat-Block;
Block B = Polycarbonat-Block

### Beispiel 1

### Poly(methylmethacrylat-block-neopentylglykolcarbonat) Blocklängen: A-Block: 5000 g/Mol, B-Block: 6500 g/Mol (aus Monomer-Initiator-Verhältnis berechnet)

Zu einer Lösung von 0,3 ml (1,5 x 10⁻³ Mol) 1-Methoxy-1-trimethylsiloxy-2-methyl-1-propen (MTS) und 4 x 10⁻⁴ g (1,5 x 10⁻⁶ Mol) Tetrabutylammoniumcyanid in 65 ml absolutem Tetrahydrofuran (THF) wurden bei Raumtemperatur 7,5 g (0,075 Mol) Methylmethacrylat (MMA) in 10 ml THF innerhalb von 30 min unter N₂ als Schutzgas zugetropft. Nach weiteren 30 min wurden 9,75 g (0,075 Mol) Neopentylglykolcarbonat (NPC) im Reaktionsansatz gelöst und das Gemisch auf 0°C gebracht. Dann wurden 0,45 g (1,6 x 10⁻³ Mol) Tris(dimethylamino)schwefel(trimethylsilyl)difluorid (TASSiMe₃F₂) gelöst in 1 ml Ethylencarbonat/THF (2:1) zugegeben. Nach einer Stunde wurde das Gemisch mit 5 ml Methanol/Phosphorsäure (95:5) und 150 ml Methanol versetzt. Das ausgefallene Polymere wurde isoliert, mit Methanol gewaschen und getrocknet. Entstandenes homopolymeres PMMA verblieb in der Mutterlauge.
Ausbeute: 15,4 g (89 % d.Th.)
¹H-NMR: 60 Mol-% PNPC im Blockcopolymer

### Beispiel 2

### Poly(methylmethacrylat-block-neopentylglykolcarbonat) Blocklängen: A-Block: 20000 g/Mol, B-Block: 20000 g/Mol (aus Monomer-Initiator-Verhältnis berechnet)

Zu einer Lösung von 0,1 ml (5 x 10⁻⁴ Mol) 1-Methoxy-1-trimethylsiloxy-2-methyl-1-propen (MTS) und 2 x 10⁻⁴ g (0,75 x 10⁻⁶ Mol) Tetrabutylammoniumcyanid in 100 ml absolutem Tetrahydrofuran (THF) wurden bei Raumtemperatur 10 g (0,1 Mol) Methylmethacrylat (MMA) in 10 ml THF innerhalb von 30 min unter N₂ als Schutzgas zugetropft. Nach weiteren 30 min wurden 10 g (0,077 Mol) Neopentylglykolcarbonat (NPC) im Reaktionsansatz gelöst und das Gemisch auf 0°C gebracht. Dann wurden 0,21 g (7,5 x 10⁻⁴ Mol) Tris(dimethylamino)schwefel(trimethylsilyl)difluorid (TASSiMe₃F₂) gelöst in 1 ml Ethylencarbonat/THF (2:1) zugegeben. Nach einer Stunde wurde das Gemisch mit 5 ml Methanol/Phosphorsäure (95:5) und 150 ml Methanol versetzt und das Polymere in 90 ml kaltem Butanol gefällt. Anschließend wurde das Polymere isoliert, mit Butanol gewaschen und getrocknet. Entstandenes homopolymeres PMMA verblieb im Fällungsmittel.
Ausbeute: 13,4 g (68 % d.Th.)
¹H-NMR: 61 Mol-% PNPC im Blockcopolymer

### Beispiel 3

### Poly(tert.-butylmethacrylat-block-neopentylglykolcarbnat) Blocklängen: A-Block: 16000 g/Mol, B-Block: 20000 g/Mol (aus Monomer-Initiator-Verhältnis berechnet)

Zu einer Lösung von 0,1 ml (5 x 10⁻⁴ Mol) 1-Methoxy-1-trimethylsiloxy-2-methyl-1-propen (MTS) und 8 g (0,056 Mol) tert.-Butylmethacrylat (tBMA) in 100 ml absolutem Tetrahydrofuran (THF) wurden bei Raumtemperatur 2 x 10⁻⁴ g (0,75 x 10⁻⁶ Mol) Tetrabutylammoniumcyanid unter N₂ als Schutzgas gegeben. Nach 20 Stunden wurden 10 g (0,077 mol) Neopentylglykolcarbonat (NPC) im Reaktionsansatz gelöst und das Gemisch auf 0°C gebracht. Dann wurden 0,15 g (5,5 x 10⁻⁴ Mol) Tris(dimethylamino)schwefel(trimethylsilyl)difluorid (TASSiMe₃F₂) gelöst in 1 ml Ethylencarbonat/THF (2:1) zugegeben. Nach einer Stunde wurde das Gemisch mit 2 ml Methanol/Phosphorsäure (95:5) und 150 ml Methanol versetzt und das Polymere in 300 ml kalten Methanol gefällt. Anschließend wurde das Polymere isoliert, mit Methanol gewaschen und getrocknet. Entstandenes homopolymeres tBMA verblieb im Fällungsmittel.
Ausbeute: 11 g (68 % d.Th.)
¹H-NMR; 73 Mol-% PNPC im Blockcopolymer

### Beispiel 4

### Poly(tert.-butylmethacrylat-block-neopentylglykolcarbonat) Blocklängen: A-Block: 10000 g/Mol, B-Block: 10000 g/Mol (aus Monomer-Initiator-Verhältnis berechnet)

Zu einer Lösung von 0,2 ml (1 x 10⁻³ Mol) 1-Methoxy-1-trimethylsiloxy-2-methyl-1-propen (MTS) und 10 g (0,07 Mol) tert.-Butylmethacrylat (tBMA) in 100 ml absolutem Tetrahydrofuran (THF) wurden bei Raumtemperatur 4 x 10⁻⁴ g (1,5 x 10⁻⁶ Mol) Tetrabutylammoniumcyanid unter N₂ als Schutzgas gegeben. Nach 20 Stunden wurden 10 g (0,077 Mol) Neopentylglykolcarbonat (NPC) im Reaktionsansatz gelöst und das Gemisch auf 0°C gebracht. Dann wurden 0,3 g (1,1 x 10⁻³ Mol) Tris(dimethylamino)schwefel(trimethylsilyl)difluorid (TASSiMe₃F₂) gelöst in 1 ml Ethylencarbonat/THF (2:1) zugegeben. Nach einer Stunde wurde das Gemisch mit 2 ml Methanol/Phosphorsäure (95:5) und 150 ml Methanol versetzt und das Polymere in 300 ml kaltem Methanol gefällt. Anschließend wurde das Polymere isoliert, mit Methanol gewaschen und getrocknet. Entstandenes homopolymeres tBMA verblieb im Fällungsmittel.
Ausbeute: 13 g (65 % d.Th.)
¹H-NMR: 74 Mol-% PNPC im Blockcopolymer

## Patentansprüche

1. Blockcopolymere der Formeln (I) und (II)
A ― B (I)
B - A - B (II)
worin
A ein Polymerisat von Acrylaten oder Methacrylaten und
B ein Polymerisat von cyclischen aliphatischen Carbonaten
darstellt.

2. Blockcopolymere nach Anspruch 1, in dem A ein Polymethacrylat und B ein Polyneopentylglykolcarbonat ist.

3. Verfahren zur Herstellung von Blockcopolymeren gemäß Anspruch 1, dadurch gekennzeichnet, daß man in einer ersten Stufe ein Acrylat oder Methacrylat in einem aprotischen organischen Lösungsmittel mit Hilfe eines Gruppentransferkatalysators bei Temperaturen von -20°C bis +50°C und einem Monomer/Lösungsmittel-Gewichtsverhältnis von 2:100 bis 30:100 unter Bildung des A-Blocks polymerisiert, in einer zweiten Stufe ein cyclisches aliphatisches Carbonat sowie eine nucleophile Fluorid-Verbindung zusetzt und bei Temperaturen von -50°C bis +50°C unter Bildung der B-Blöcke weiter polymerisiert und anschließend die polymerisationsaktiven Zentren desaktiviert.

## Claims

1. Block copolymers of formulae (I) and (II)
A ― B (I)
B - A - B (II
)
where
A represents a polymer of acrylates or methacrylates, and
B represents a polymer of cyclic aliphatic carbonates.

2. Block copolymers according to claim 1, in which A is a polymethacrylate and B is a polyneopentylglycol carbonate.

3. A method of producing block copolymers according to claim 1, characterised in that in a first step an acrylate or methacrylate is polymerised in an aprotic organic solvent with the aid of a group transfer catalyst at temperatures of -20°C to +50°C and at a monomer/solvent weight ratio of 2:100 to 30:100 with the formation of the A block, in a second step a cyclic aliphatic carbonate and a nucleophilic fluoride compound are added and further polymerisation is effected at temperatures of -50°C to +50°C with the formation of the B blocks, and the active polymerisation centres are subsequently deactivated.

## Revendications

1. Copolymères séquencés de formules (I) et (II)
A ― B (I)
B - A - B (II
)
dans lesquelles
A représente un produit de polymérisation d'acrylates ou de méthacrylates et
B représente un produit de polymérisation de carbonates aliphatiques cycliques.

2. Copolymères séquencés selon la revendication 1, dans lesquels A est un polyméthacrylate et B est un poly(carbonate de néopentylglycol).

3. Procédé de production de copolymères séquencés selon la revendication 1, caractérisé en ce qu'on polymérise dans une première étape un acrylate ou un méthacrylate dans un solvant aprotique organique à l'aide d'un catalyseur de transfert de groupements à des températures comprises entre -20°C et +50°C et à un rapport massique du monomère au solvant compris entre 2:100 et 30:100 avec formation de la séquence A, en ce qu'on ajoute dans une deuxième étape un carbonate aliphatique cyclique ainsi qu'un composé nucléophile de type fluorure et en ce qu'on polymérise encore à des températures comprises entre -50°C et +50°C avec formation des séquences B et en ce qu'on désactive ensuite les centres actifs de polymérisation.
